# EUROPEAN PATENT APPLICATION

(11) **EP 4 310 538 A1**
(43) Date of publication of application: **24.01.2024**
(21) Application number: 22771488.8
(22) Date of filing: 16.03.2022
(51) Int. Cl.: G01S 7/481, B60R 11/02, G01S 17/931, G02B 26/10

(54) **SENSOR SYSTEM**

(30) Priority: 19.03.2021 JP 2021045479; 19.03.2021 JP 2021045480; 19.03.2021 JP 2021045481
(71) Applicant: KOITO MANUFACTURING CO., LTD., Minato-ku, Tokyo, 108-8711 (JP)
(72) Inventor: INOUE Hiroshi, Shizuoka-shi, Shizuoka 424-8764 (JP)
(74) Representative: Grünecker Patent- und Rechtsanwälte PartG mbB
(86) International application number: PCT/JP2022/012096
(87) International publication number: WO 2022/196743

(57) **Abstract**

A sensor (11) detects an object situating in a sensing direction. A deflecting device (12) changes the sensing direction cyclically. A housing (13) accommodates the sensor (11) and the deflecting device (12). A vibration absorbing device (14) is adapted to be disposed between the housing (13) and a support (31). The vibration absorbing device (14) includes a first vibration absorbing device (141), a second vibration absorbing device (142), and an intermediate member (143). The intermediate member (143) has a first surface (143a) adapted to face the housing (13) with a first gap (G1) therebetween and a second surface (143b) adapted to face the support (31) with a second gap (G2) therebetween. The first vibration absorbing device (141) is disposed between the housing (13) and the first surface (143a) of the intermediate member (143). The second vibration absorbing device (142) is adapted to be disposed between the support (31) and the second surface (143b) of the intermediate member (143).

## Description

### Field

The presently disclosed subject matter relates to a sensor system adapted to be installed in a monitoring device.

### Background

Patent Document 1 discloses a LiDAR (Light Detecting and Ranging) system adapted to be installed in a vehicle as an example of the sensor system. The LiDAR system includes a deflecting device that cyclically changes a traveling direction of light emitted from a light source in order to detect an external object of the vehicle. The deflecting device may be a cyclical vibration source.

### Citation List

### Patent Document

Patent Document 1: Japanese Patent Publication No. 2020-519891 A

### Summary

### Technical Problem

It is demanded to suppress occurrence of inconvenience due to cyclical vibrations generated from the sensor system.

### Solution to Problem

A first illustrative aspect of the presently disclosed subject matter provides a sensor system adapted to be installed in a monitoring device, comprising:
a sensor configured to detect an object situating in a sensing direction;
a deflecting device configured to change the sensing direction cyclically;
a housing accommodating the sensor and the deflecting device; and
a vibration absorbing device adapted to be disposed between the housing and a support that constitutes a part of the monitoring device,
wherein the vibration absorbing device includes:
   an intermediate member having a first surface adapted to face the housing with a first gap therebetween and a second surface adapted to face the support with a second gap therebetween;
   a first vibration absorbing device disposed between the housing and the first surface of the intermediate member; and
   a second vibration absorbing device adapted to be disposed between the support and the second surface of the intermediate member.

A second illustrative aspect of the presently disclosed subject matter provides a sensor system adapted to be installed in a monitoring device, comprising:
a sensor configured to detect an object situating in a sensing direction;
a deflecting device configured to change the sensing direction cyclically;
a housing accommodating the sensor and the deflecting device; and
a vibration absorbing device adapted to be disposed between the housing and a support that constitutes a part of the monitoring device,
wherein the vibration absorbing device includes a pair of magnetized members that are magnetized so as to have a same pole, and are arranged so as to face each other in a first direction with a gap therebetween.

A third illustrative aspect of the presently disclosed subject matter provides a sensor system adapted to be installed in a monitoring device, comprising:
a sensor configured to detect an object situating in a sensing direction;
a deflecting device configured to change the sensing direction cyclically;
a housing accommodating the sensor and the deflecting device; and
a vibration absorbing device adapted to be disposed between the housing and a support that constitutes a part of the monitoring device,
wherein the vibration absorbing device includes:
   a pair of members arranged so as to face each other in a first direction;
   a cavity at least partially accommodating the members while allowing displacement of the members in the first direction; and
   a control device configured to control an amount of fluid accommodated in the cavity so as to form a gap between the members.

As described above, the deflecting device that cyclically changes the sensing direction of the sensor may be a source of cyclical vibrations. When a housing accommodating the sensor and the deflecting device resonates with the vibration, inconvenience would be occurred by generation of larger vibrations. For example, the resonance vibrations itself or sound caused by the resonance vibrations may be transmitted to the monitoring device, thereby causing discomfort to the user. Alternatively, when the resonance vibrations are transmitted to the sensor, the sensing accuracy of the sensor may be decreased.

According to the configuration of the first illustrative aspect, the resonance vibrations generated in the housing are transmitted to the intermediate member while being absorbed by the first vibration absorbing device. Since the intermediate member is disposed between the housing and the support with the first gap and the second gap therebetween, the bending deformation of the intermediate member is allowed, so that the absorption of the resonance vibrations is promoted. Since the remaining resonance vibrations are further subjected to the absorption with the second vibration absorbing device, the vibrations that could be transmitted to the support can be remarkably damped. Accordingly, it is possible to suppress the occurrence of inconvenience due to the cyclical vibrations generated from the sensor system.

According to the configuration of the second illustrative aspect, when the pair of magnetized members approach each other by the resonance vibrations generated in the housing, the repulsive force for separating the two members is increased. In other words, since the gap formed between the pair of magnetized members and the repulsive force acting between the pair of magnetized members serve as a cushion, it is possible to remarkably damp the vibrations that could be transmitted to the support. Accordingly, it is possible to suppress the occurrence of inconvenience due to the cyclical vibrations generated from the sensor system.

According to the configuration of the third illustrative aspect, the vibration absorbing device including the pair of members separated by the fluid is interposed between the housing and the support. For example, when the pair of members approaches due to the resonance vibrations generated in the housing, the control device increases the amount of fluid accommodated in the cavity. As a result, a force for widening the gap acts. Conversely, when the pair of members is separated from the initial state, the control device decreases the amount of fluid accommodated in the cavity. As a result, a force for narrowing the gap acts. In other words, since the fluid forming the gap between the pair of members serves as a vibration damping material, vibrations that could be transmitted to the support can be remarkably damped. Accordingly, it is possible to suppress the occurrence of inconvenience due to the cyclical vibrations generated from the sensor system.

### Brief Description of Drawings

FIG. 1 illustrates a configuration of a sensor system according to one embodiment.
FIG. 2 illustrates detailed configurations of a sensor and a deflecting device of FIG. 1.
FIG. 3 illustrates a vehicle in which the sensor system of FIG. 1 is to be installed.
FIG. 4 illustrates an appearance of an exemplary vibration absorbing device.
FIG. 5 illustrates an appearance of an exemplary vibration absorbing device.
FIG. 6 illustrates an appearance of another exemplary vibration absorbing device.
FIG. 7 illustrates an appearance of another exemplary vibration absorbing device.
FIG. 8 is a diagram for explaining analysis for a resonance vibration mode of a housing of FIG. 1.
FIG. 9 illustrates another exemplary shape of the housing of FIG. 1.
FIG. 10 illustrates an appearance of the sensor system viewed from a direction of an arrow X in FIG. 9.
FIG. 11 illustrates an exemplary appearance of an intermediate member of FIG. 1.
FIG. 12 illustrates another exemplary appearance of the intermediate member of FIG. 1.
FIG. 13 illustrates a locational relationship between a first vibration absorbing device and a second vibration absorbing device of FIG. 1.
FIG. 14 illustrates a configuration of a sensor system according to another embodiment.
FIG. 15 illustrates a configuration of another exemplary vibration absorbing device.
FIG. 16 illustrates a configuration of another exemplary vibration absorbing device.
FIG. 17 illustrates a configuration of another exemplary vibration absorbing device.
FIG. 18 illustrates a configuration of another exemplary vibration absorbing device.
FIG. 19 illustrates a configuration of another exemplary vibration absorbing device.
FIG. 20 illustrates a configuration of another exemplary vibration absorbing device.
FIG. 21 illustrates a configuration of another exemplary vibration absorbing device.
FIG. 22 illustrates a configuration of another exemplary vibration absorbing device.
FIG. 23 illustrates another exemplary shape of a housing of FIG. 14.
FIG. 24 illustrates an appearance of the sensor system viewed from a direction of an arrow XXIV in FIG. 23.
FIG. 25 illustrates another exemplary configuration of the sensor system of FIG. 14.
FIG. 26 illustrates a locational relationship between a first vibration absorbing device and a second vibration absorbing device of FIG. 25.
FIG. 27 illustrates a lighting device in which the sensor system according to each of the embodiments is to be installed.
FIG. 28 illustrates a traffic infrastructure equipment in which the sensor system according to each of the embodiments is to be installed.

### Description of Embodiments

Examples of embodiments will be described below in detail with reference to the accompanying drawings. In each of the drawings used in the following descriptions, the scale is appropriately changed in order to make each member have a recognizable size.

In the accompanying drawings, an arrow F represents a forward direction of the illustrated structure. An arrow B represents a rearward direction of the illustrated structure. An arrow L represents a leftward direction of the illustrated structure. An arrow R represents a rightward direction of the illustrated structure. The terms "left" and "right" used in the following descriptions represent the leftward direction and the rightward direction as viewed from a driver's seat.

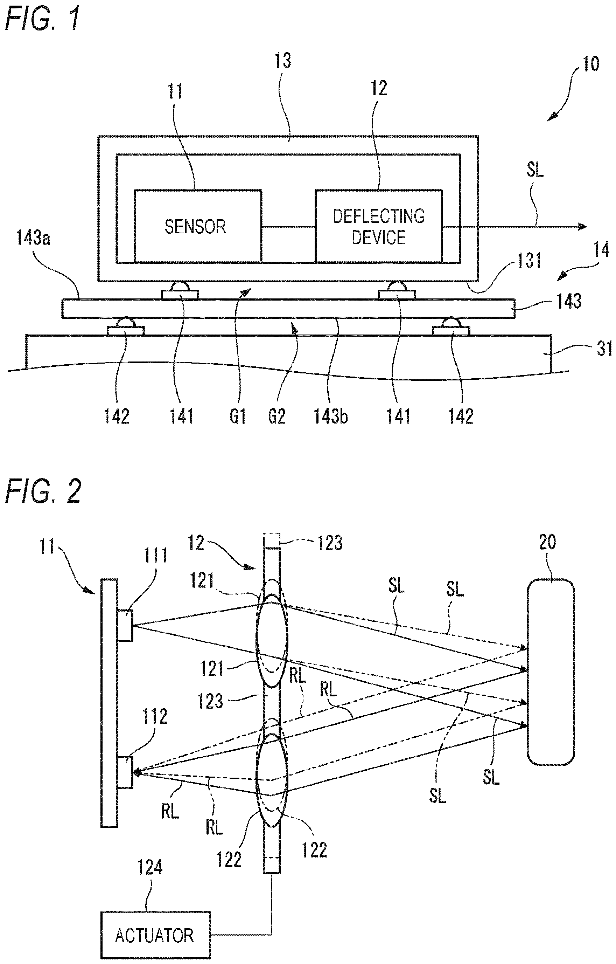

FIG. 1 illustrates a configuration of a sensor system 10 according to an embodiment. The sensor system 10 includes a sensor 11 and a deflecting device 12.

As illustrated in FIG. 2, the sensor 11 includes a light emitting element 111. The light emitting element 111 is configured to emit sensing light SL in a sensing direction. As the light emitting element 111, a semiconductor light emitting element such as a light emitting diode, a laser diode, or an EL element can be used. As the sensing light SL, for example, infrared light having a wavelength of 905 nm can be used.

The sensor 11 includes a light receiving element 112. The light receiving element 112 is configured to detect returned light RL generated by an object 20 situating in the sensing direction. As the light receiving element 112, a semiconductor light receiving element such as a photodiode, a phototransistor, or a photoresistor having sensitivity to the wavelength of the sensing light SL can be used. In other words, the sensor 11 is configured to detect an object 20 situating in the sensing direction.

The deflecting device 12 includes a first lens 121, a second lens 122, and a supporting frame 123. The configuration and arrangement of the first lens 121 are determined so as to allow passage of the sensing light SL emitted from the light emitting element 111. The configuration and arrangement of the second lens 122 are determined so as to allow passage of the returned light RL toward the light receiving element 112. The supporting frame 123 supports the first lens 121 and the second lens 122.

The deflecting device 12 includes an actuator 124. The actuator 124 is configured to cyclically displace the supporting frame 123 in a direction intersecting the sensing direction. The traveling direction of the sensing light SL, that is, the sensing direction of the sensor 11 is cyclically changed by the displacement. In FIG. 2, the first lens 121, the second lens 122, the sensing light SL, and the returned light RL after displacement are illustrated with dashed chain lines.

For example, the sensor 11 can acquire information as to the distance to the object 20 situating in the sensing direction based on a time length from the time when the sensing light SL is emitted in the sensing direction to the time when the returned light RL is detected. Information as to the shape of the object 20 can be acquired by acquiring the distance information for multiple points while changing the sensing direction with the deflecting device 12. In addition to or in place of the above, information as to an attribute such as the material of the object 20 can be acquired based on the difference in the waveforms of the sensing light SL and the returned light RL.

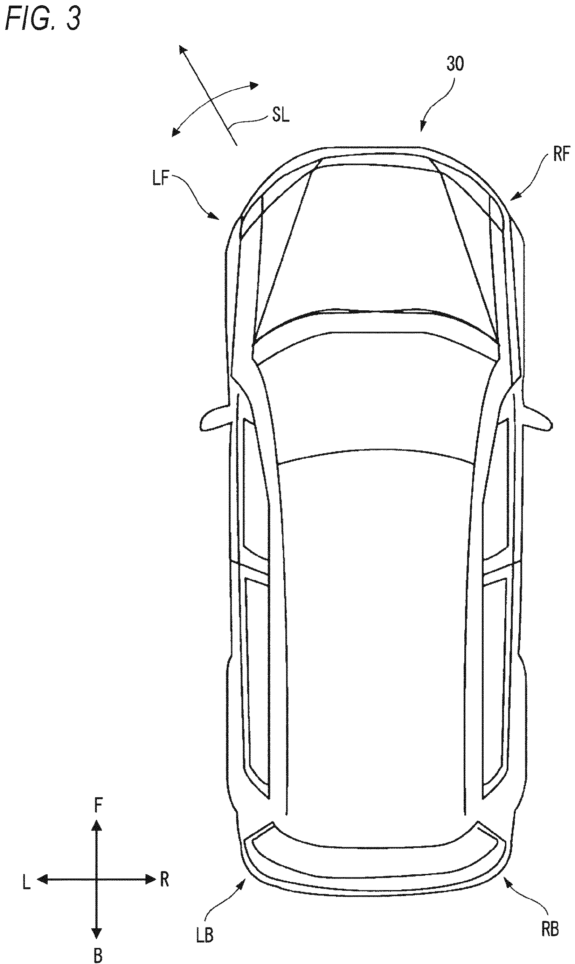

The sensor system 10 is installed in a vehicle 30 illustrated in FIG. 3. The shape of the vehicle body of the vehicle 30 is a mere example. For example, the sensor system 10 is disposed on a left front portion LF of the vehicle 30. The left front portion LF is an area located on the left of the center in a left-right direction of the vehicle 30 and ahead of the center in a front-rear direction of the vehicle 30. In this case, the sensing direction of the sensor 11 is determined so as to include at least one of the front and the left of the left front portion LF. The vehicle 30 is an example of a mobile entity. The vehicle 30 is an example of a monitoring device.

As illustrated in FIG. 1, a sensor system 10 includes a housing 13. The housing 13 accommodates the sensor 11 and the deflecting device 12. The material for forming the housing 13 may be appropriately determined.

The sensor system 10 includes a vibration absorbing device 14. The vibration absorbing device 14 is configured to be disposed between the housing 13 and a support 31 when the sensor system 10 is installed in the vehicle 30. The support 31 is a component constituting a part of the vehicle 30.

The vibration absorbing device 14 includes a first vibration absorbing device 141, a second vibration absorbing device 142, and an intermediate member 143. The intermediate member 143 has a first surface 143a and a second surface 143b. The first surface 143a faces the housing 13 with a first gap G1 therebetween. The second surface 143b faces the support 31 with a second gap G2 therebetween.

The first vibration absorbing device 141 is disposed between the first surface 143a of the intermediate member 143 and the housing 13. The second vibration absorbing device 142 is disposed between the second surface 143b of the intermediate member 143 and the support 31.

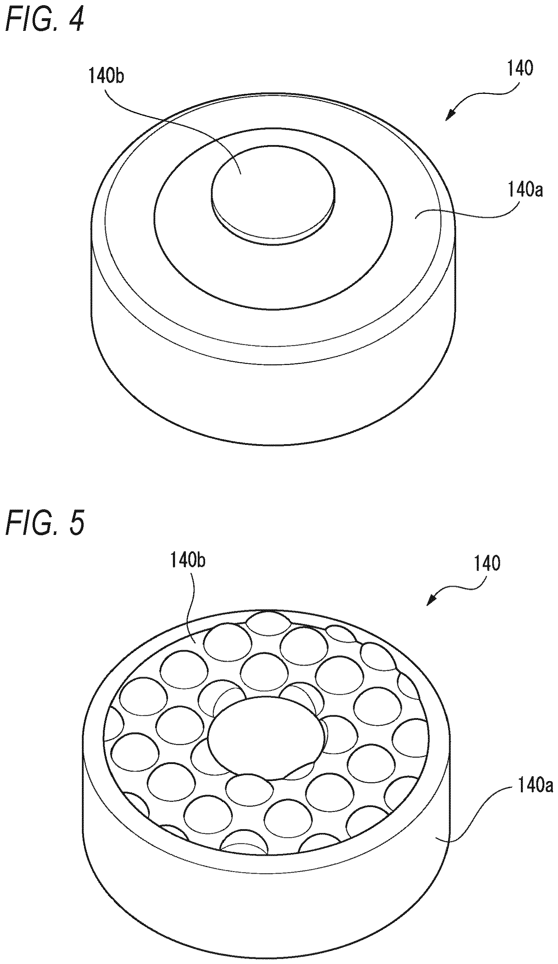

Each of the first vibration absorbing device 141 and the second vibration absorbing device 142 may have the configuration illustrated in FIGS. 4 and 5. In a case where the configuration common to the first vibration absorbing device 141 and the second vibration absorbing device 142 is described, the first vibration absorbing device 141 and the second vibration absorbing device 142 are collectively referred to as "a vibration absorbing device 140" as required.

FIG. 4 illustrates an appearance of the vibration absorbing device 140 as viewed from the side of the housing 13. FIG. 5 illustrates an appearance of the vibration absorbing device 140 as viewed from the side of the support 31.

The vibration absorbing device 140 includes a rigid portion 140a and an elastic portion 140b. The rigid portion 140a has a higher rigidity than the elastic portion 140b. The rigid portion 140a may be formed of a metal alloy. Examples of the metal alloy include brass and stainless steel. The elastic portion 140b has a higher elasticity than the rigid portion 140a. The elastic portion 140b may be formed of cork, rubber, a vibration absorbing member such as Sorbothane (registered trademark) and Hanenite (registered trademark), or the like.

The vibration absorbing device 140 is disposed such that the elastic portion 140b contacts any one of the housing 13, the intermediate member 143, and the support 31.

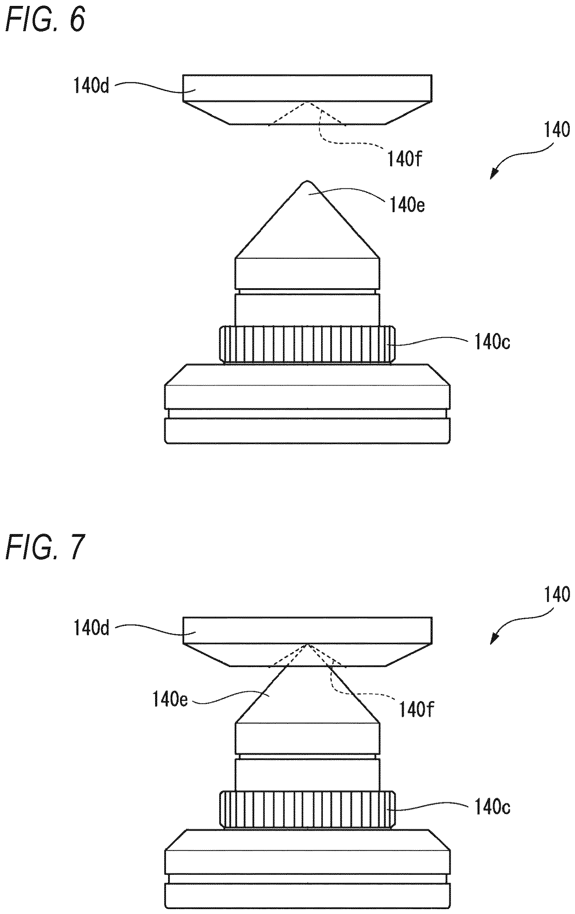

As illustrated in FIG. 6, the vibration absorbing device 140 may be configured to include a supporting member 140c and a supported member 140d. The supporting member 140c has a conical protrusion 140e. The supported member 140d has a recessed portion 140f. For example, the supporting member 140c is disposed on the first surface 143a of the intermediate member 143 and the support 31, whereas the supported member 140d is installed on the second surface 143b of the intermediate member 143 and the housing 13. When the protrusion 140e and the recess 140f are coupled as illustrated in FIG. 7, the supported member 140d is supported by the tip of the protrusion 140e.

As described above, the deflecting device that cyclically changes the sensing direction of the sensor may be a source of cyclical vibrations. When a housing accommodating the sensor and the deflecting device resonates with the vibration, inconvenience would be occurred by generation of larger vibrations. For example, the resonance vibrations itself or sound caused by the resonance vibrations may be transmitted to the vehicle, thereby causing discomfort to the occupant. Alternatively, when the resonance vibrations are transmitted to the sensor, the sensing accuracy of the sensor may be decreased.

In the configuration of the sensor system 10 according to the present embodiment, the intermediate member 143 sandwiched between the first vibration absorbing device 141 and the second vibration absorbing device 142 is interposed between the housing 13 and the support 31. The resonance vibrations generated in the housing 13 are transmitted to the intermediate member 143 while being absorbed by the first vibration absorbing device 141. Since the intermediate member 143 is disposed between the housing 13 and the support 31 with the first gap G1 and the second gap G2 therebetween, the bending deformation of the intermediate member 143 is allowed, so that the absorption of the resonance vibrations is promoted. Since the remaining resonance vibrations are further subjected to the absorption with the second vibration absorbing device 142, the vibrations that could be transmitted to the support 31 can be remarkably damped. Accordingly, it is possible to suppress the occurrence of inconvenience due to the cyclical vibrations generated from the sensor system 10.

The first vibration absorbing device 141 may be disposed at a position corresponding to an antinode of the vibration mode of the resonance frequency included in the vibrations generated in the housing 13 according to the operation of the deflecting device 12. The position of the antinode of the vibration mode can be specified by an analytical method used in a well-known active vibration control method.

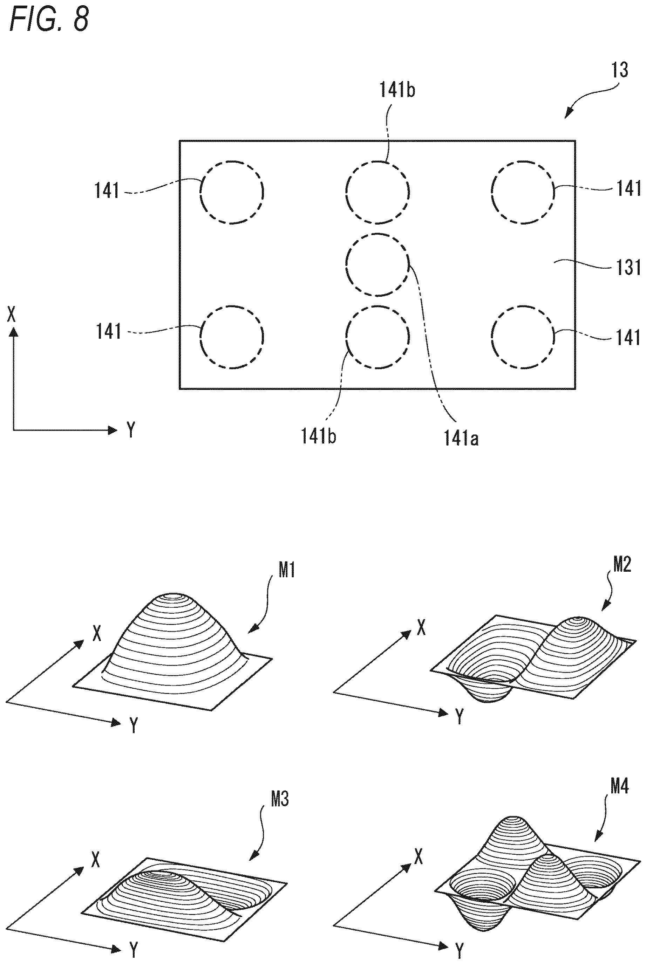

FIG. 8 illustrates some examples of vibration modes that may be specified by the analysis of the vibration mode performed with respect to a bottom surface 131 of the housing 13. The vibration mode M1 includes an odd order vibration mode in the X direction, and includes an odd order vibration mode in the Y direction. The vibration mode M2 includes an odd order vibration mode in the X direction, and includes an even order vibration mode in the Y direction. The vibration mode M3 includes an even order vibration mode in the X direction, and includes an odd order vibration mode in the Y direction. The vibration mode M4 includes an even order vibration mode in the X direction, and includes an even order vibration mode in the Y direction.

The position of the antinode of the vibration mode specified in advance in this manner corresponds to a position where the driving force of the resonance vibrations that may be generated in the housing 13 with the operation of the deflecting device 12 increases. By disposing the first vibration absorbing device 141 at this position, the resonance vibrations generated in the housing 13 can be efficiently damped.

For example, it can be seen that the positions of the four first vibration absorbing devices 141 illustrated in FIG. 8 correspond to the positions of the four antinodes in the vibration mode M4.

In particular, since the odd order vibration mode has high acoustic radiation efficiency, generation of sonic waves due to the resonance vibrations can be suppressed by disposing the first vibration absorbing device 141 at the antinode position of the odd order vibration mode, so that it is possible to reduce the vibration sound that could be transmitted to the occupant of the vehicle 30.

As an example, in a case where the vibration mode M1 is specified for the bottom surface 131 of the housing 13, the first vibration absorbing device 141a may be disposed at a position corresponding to the antinode of the vibration mode M1 in addition to or in place of the first vibration absorbing device 141. As another example, in a case where the vibration mode M2 is specified for the bottom surface 131 of the housing 13, the first vibration absorbing device 141b may be disposed at a position corresponding to the antinode of the vibration mode M1 in addition to or in place of the first vibration absorbing device 141.

It should be noted that as long as it is avoided a position corresponding to the node of the vibration mode of the resonance frequency included in the vibrations generated in the housing 13 with the operation of the deflecting device 12, the position of the first vibration absorbing device 141 may not exactly coincide with the position of the antinode of the vibration mode.

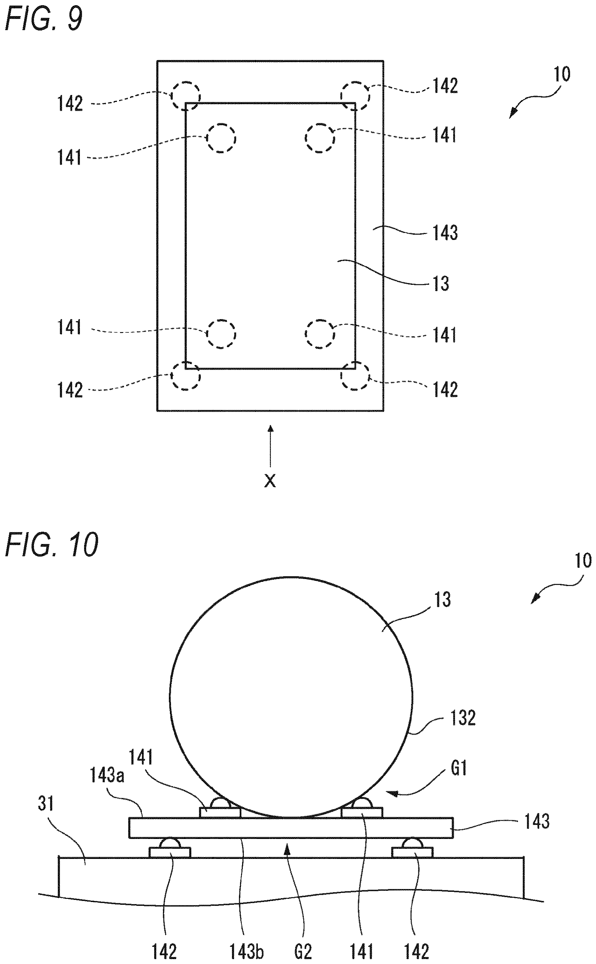

The shape of the housing 13 does not have to be a rectangular parallelepiped shape having a flat bottom surface 131. As illustrated in FIGS. 9 and 10, the housing 13 may have a cylindrical shape having a curved surface 132 facing the intermediate member 143. In this case, the above-described vibration mode analysis is performed with respect to the curved surface 132, so that the first vibration absorbing device 141 is disposed so as to avoid a position of the node of the specified resonance vibration mode.

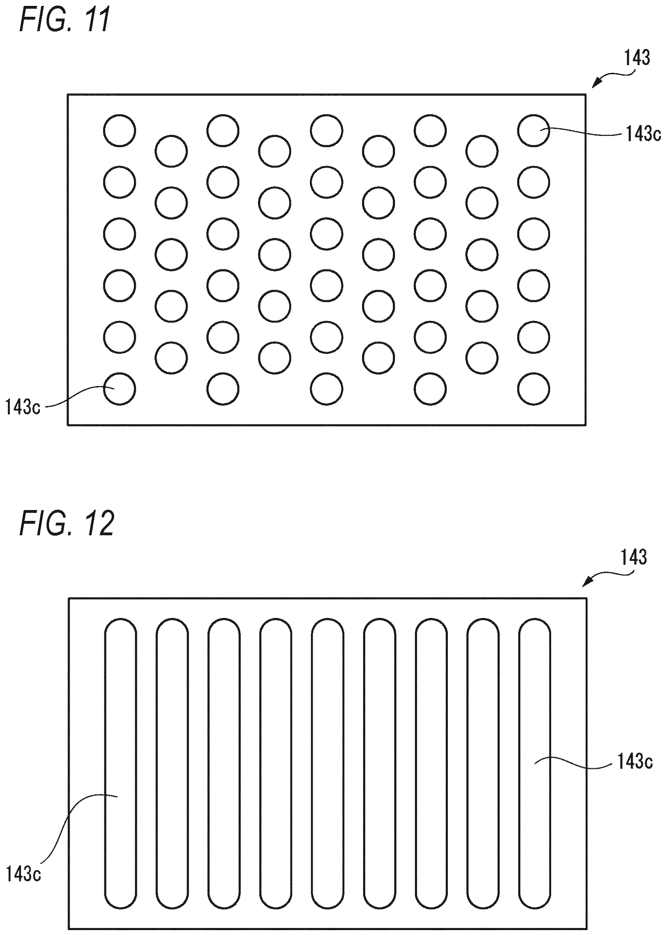

As illustrated in FIG. 11, the intermediate member 143 of the vibration absorbing device 14 may be formed so as to have a plurality of openings 143c. Each opening 143c communicates the first surface 143a and the second surface 143b. In other words, each opening 143c communicates the first gap G1 and the second gap G2. FIG. 12 illustrates another example of the shape of the openings 143c.

According to such a configuration, even if the intermediate member 143 vibrates due to the resonance vibrations from the housing 13 transmitted through the first vibration absorbing device 141, it is possible to remarkably reduce the efficiency with which air is pushed out toward the support 31 by the vibrations. As a result, it is possible to suppress the generation of sonic waves caused by the resonance vibrations, and to reduce the vibration sound that could be transmitted to the occupant of the vehicle 30.

The number and shape of the openings 143c can be appropriately determined within such a range that the intermediate member 143 has a rigidity capable of supporting the housing 13 by way of the first vibration absorbing device 141 can be secured, and has an opening ratio capable of exhibiting the above effect suppressing the sonic waves.

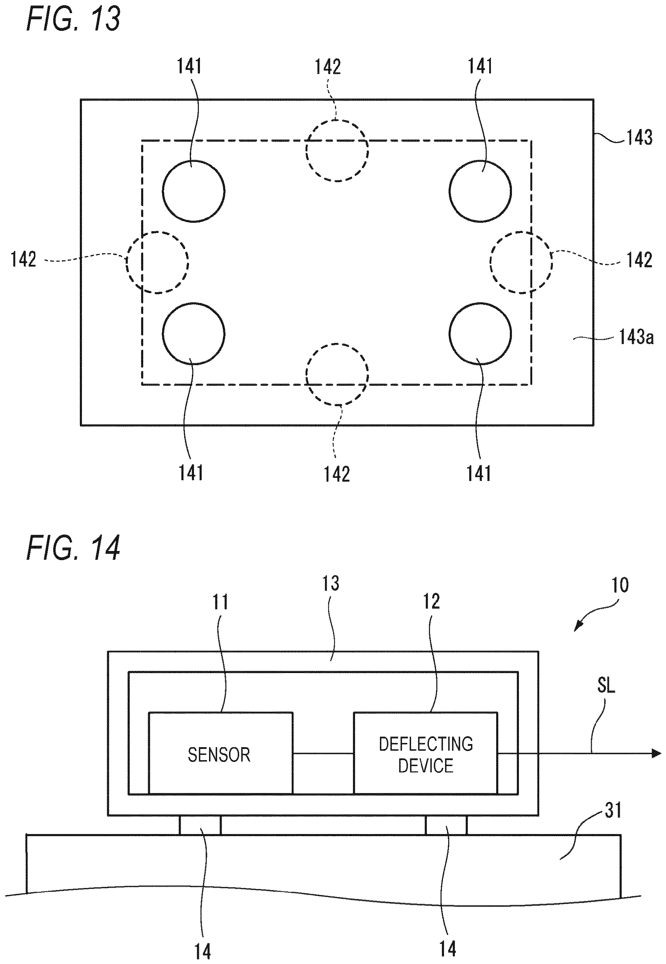

As illustrated in FIG. 13, the second vibration absorbing device 142 may be disposed such that at least a portion thereof does not overlap the first vibration absorbing device 141 when viewed from a normal direction of the first surface 143a of the intermediate member 143.

Since the vibration mode generated in the intermediate member 143 is different from the vibration mode generated in the housing 13, the second vibration absorbing device 142 is disposed at a position different from the first vibration absorbing device 141 when viewed from the normal direction of the first surface 143a of the intermediate member 143, so that the vibration that could be transmitted to the support 31 can be efficiently absorbed.

The second vibration absorbing device 142 may be disposed so as to avoid the node of the vibration mode specified by the analysis performed with respect to the intermediate member 143 as described with reference to FIG. 8.

FIG. 14 illustrates a configuration of a sensor system 10 according to another embodiment. Components substantially identical with the embodiment described with reference to FIG. 1 are denoted with the same reference symbols, and repetitive descriptions thereof will be omitted.

In the present embodiment, the vibration absorbing devices 14 are stacked on the support 31, and the housing 13 is stacked on the vibration absorbing devices 14. In the following descriptions, the up-down direction in FIG. 14 is referred to as a "stacking direction" as required. The stacking direction is an example of a first direction.

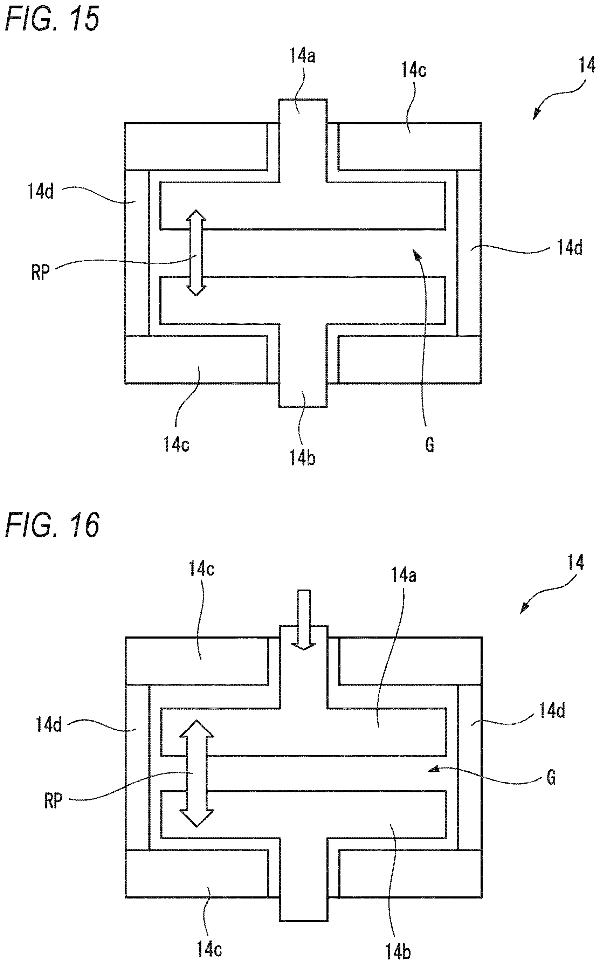

As illustrated in FIG. 15, the vibration absorbing device 14 includes a first magnetized member 14a and a second magnetized member 14b. The first magnetized member 14a and the second magnetized member 14b are magnetized so as to have a same pole. The first magnetized member 14a and the second magnetized member 14b are arranged so as to face each other in the stacking direction with a gap G therebetween that is formed with the repulsive force RP generated by the same-pole magnetization. In other words, the first magnetized member 14a and the second magnetized member 14b maintain a non-contact state at a position where the own weight and the repulsive force RP are balanced. The pair of the first magnetized member 14a and the second magnetized member 14b is an example of a pair of magnetized members.

The first magnetized member 14a is configured to be coupled to the housing 13. The second magnetized member 14b is configured to be coupled to the support 31. As used herein, the expression "coupled" is meant to include a state that the two members are fixed by adhesion, welding, or the like, a state that the two members are fixed by screwing, fitting, engaging, or the like, and a state that the two members are in contact by stacking. In other words, the housing 13 and the supporting member 31 are coupled to each other with the vibration absorbing device 14 having a gap G formed therein.

As described above, the deflecting device that cyclically changes the sensing direction of the sensor may be a source of cyclical vibrations. When a housing accommodating the sensor and the deflecting device resonates with the vibration, inconvenience would be occurred by generation of larger vibrations. For example, the resonance vibrations itself or sound caused by the resonance vibrations may be transmitted to the vehicle, thereby causing discomfort to the occupant. Alternatively, when the resonance vibrations are transmitted to the sensor, the sensing accuracy of the sensor may be decreased.

In the configuration of the sensor system 10 according to the present embodiment, the vibration absorbing device 14 including the pair of magnetized members magnetized so as to have a same pole is interposed between the housing 13 and the support 31. As illustrated in FIG. 16, when the pair of magnetized members approach each other by the resonance vibrations generated in the housing 13, the repulsive force RP for separating the two members is increased. In other words, since the gap G formed between the pair of magnetized members and the repulsive force RP acting between the pair of magnetized members serve as a cushion, it is possible to remarkably damp the vibrations that could be transmitted to the support 31. Accordingly, it is possible to suppress the occurrence of inconvenience due to the cyclical vibrations generated from the sensor system 10.

As illustrated in FIGS. 15 and 16, the vibration absorbing device 14 may include a regulating member 14c. The regulating member 14c has a surface extending in a direction intersecting the stacking direction, and regulates the displacement of the first magnetized member 14a and the second magnetized member 14b in the stacking direction. The direction intersecting the stacking direction is an example of a second direction.

According to such a configuration, by keeping the width of the gap G in an appropriate range, it is possible to easily maintain the facing state of the first magnetized member 14a and the second magnetized member 14b. For example, it is possible to prevent the first magnetized member 14a and the second magnetized member 14b from being separated to such an extent that the first magnetized member 14a and the second magnetized member 14b cannot be restored to the balanced state due to the large repulsive force RP that may be generated when the first magnetized member 14a and the second magnetized member 14b are excessively approached by an unexpected shock of a degree exceeding the resonance vibrations.

In addition to or in place of the regulating member 14c, the vibration absorbing device 14 may include a guide member 14d. The guide member 14d has a surface extending along the stacking direction, and regulates the displacement in a direction intersecting the stacking direction while allowing the displacement of the first magnetized member 14a and the second magnetized member 14b in the stacking direction.

The repulsive force RP acting between the first magnetized member 14a and the second magnetized member 14b may have a component in a direction intersecting the stacking direction. By providing the guide member 14d as described above, it is possible to prevent the occurrence of a situation that the first magnetized member 14a and the second magnetized member 14b cannot maintain the facing state in the stacking direction with the repulsive force RP acting in the direction intersecting the stacking direction.

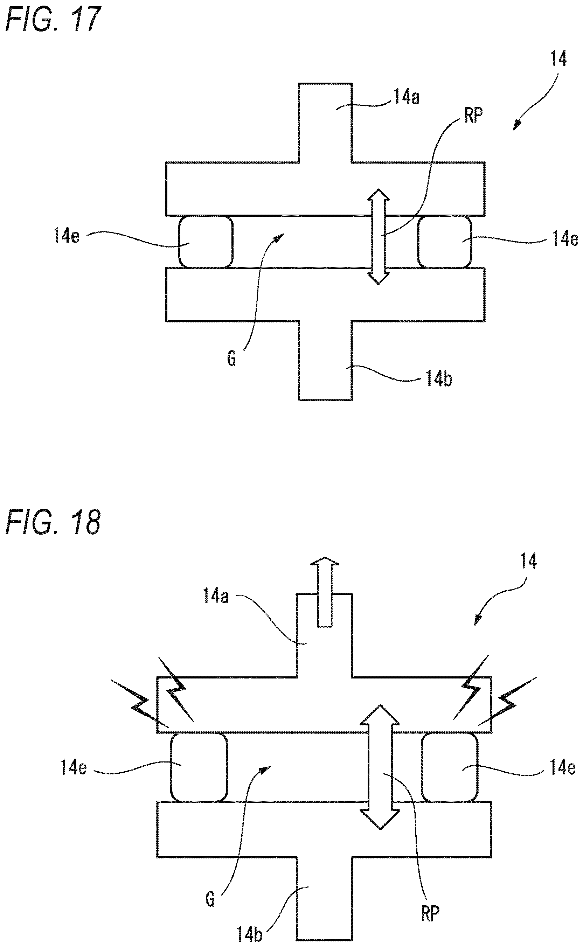

FIG. 17 illustrates another example of the configuration of the vibration absorbing device 14. In this example, a regulating member 14e is disposed between the first magnetized member 14a and the second magnetized member 14b. The regulating member 14e is coupled to each of the first magnetized member 14a and the second magnetized member 14b. The regulating member 14e may be formed of a vibration absorbing member such as Sorbothane (registered trademark) and Hanenite (registered trademark), or an elastic member such as rubber.

The regulating member 14e regulates the displacement of the first magnetized member 14a and the second magnetized member 14b in the stacking direction. Specifically, when the first magnetized member 14a and the second magnetized member 14b approach each other with the vibrations generated from the housing 13, the regulating member 14e is elastically compressed and deformed so as to contribute to the absorption of the vibrations while suppressing an excessive approach, that is, generation of an excessive repulsive force RP. Even in a case where an excessive repulsive force RP is generated by an unexpected shock of a degree exceeding the resonance vibrations, as illustrated in FIG. 18, the regulating member 14e prevents excessive separation of the first magnetized member 14a and the second magnetized member 14b, so that it is possible to prevent the occurrence of the situation that the first magnetized member 14a and the second magnetized member 14b are separated to such an extent that they cannot be restored to the balanced state.

Accordingly, it is possible to maintain the width of the gap G in an appropriate range with a simpler configuration, and it is possible to maintain the facing state of the first magnetized member 14a and the second magnetized member 14b.

In addition to the regulating member 14e, the guide member 14d described with reference to FIGS. 15 and 16 may be provided.

As in the example described with reference to FIG. 8, the vibration absorbing device 14 may be disposed at a position corresponding to the antinode of the vibration mode of the resonance frequency included in the vibrations generated in the housing 13 with the operation of the deflecting device 12. The position of the antinode of the vibration mode can be specified by an analytical method used in a well-known active vibration control method.

In particular, since the odd order vibration mode has high acoustic radiation efficiency, generation of sonic waves due to the resonance vibrations can be suppressed by disposing the vibration absorbing device 14 at the antinode position of the odd order vibration mode, so that it is possible to reduce the vibration sound that could be transmitted to the occupant of the vehicle 30.

It should be noted that as long as it is avoided a position corresponding to the node of the vibration mode of the resonance frequency included in the vibrations generated in the housing 13 with the operation of the deflecting device 12, the position of the vibration absorbing device 14 may not exactly coincide with the position of the antinode of the vibration mode.

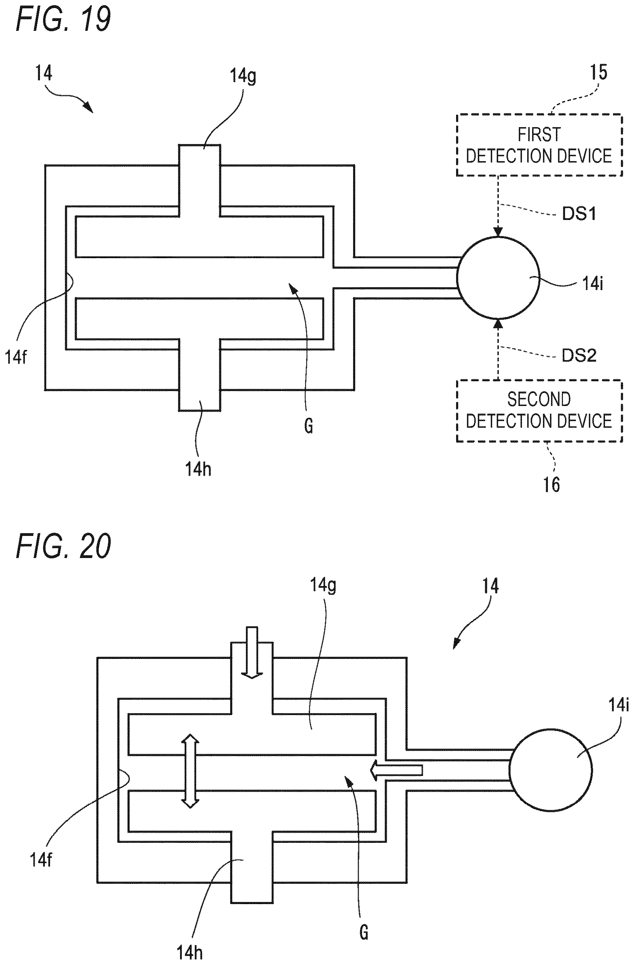

FIG. 19 illustrates another exemplary configuration of the vibration absorbing device 14. Components substantially identical with the examples described with reference to FIGS. 15 to 18 are denoted with the same reference symbols, and repetitive descriptions thereof will be omitted. The vibration absorbing device 14 according to the present example includes a housing for defining a cavity 14f. The cavity 14f accommodates a portion of a first member 14g and a second member 14h while allowing the first member 14g and the second member 14h to be displaced in the stacking direction.

The vibration absorbing device 14 according to the present example includes a control device 14i. The control device 14i is configured to be able to control the amount of fluid accommodated in the cavity 14f. Examples of fluids include compressed air and oil. The control device 14i may be implemented by, for example, a pump device. A gap G is formed between the first member 14g and the second member 14h with the fluid accommodated in the cavity 14f. In other words, the housing 13 and the supporting member 31 are coupled to each other with the vibration absorbing device 14 having a gap G formed therein.

For example, the vibration absorbing device 14 may include a displacement sensor for detecting the displacement of each of the first member 14g and the second member 14h. The displacement sensor may be implemented by an optical sensor installed on an inner wall of the cavity 14f, an acceleration sensor installed in each of the first member 14g and the second member 14h, or the like. The displacement sensor may be configured to output a detection signal corresponding to a displacement amount of each of the first member 14g and the second member 14h. The control device 14i may be configured to change the amount of fluid accommodated in the cavity 14f in a case where the displacement amount corresponding to the detection signal exceeds a threshold value.

As described above, the deflecting device that cyclically changes the sensing direction of the sensor may be a source of cyclical vibrations. When a housing accommodating the sensor and the deflecting device resonates with the vibration, inconvenience would be occurred by generation of larger vibrations. For example, the resonance vibrations itself or sound caused by the resonance vibrations may be transmitted to the vehicle, thereby causing discomfort to the occupant. Alternatively, when the resonance vibrations are transmitted to the sensor, the sensing accuracy of the sensor may be decreased.

In the configuration of the sensor system 10 according to the present embodiment, the vibration absorbing device 14 including the pair of members separated by the fluid is interposed between the housing 13 and the support 31. As illustrated in FIG. 20, when the pair of members approaches due to the resonance vibrations generated in the housing 13, the control device 14i increases the amount of fluid accommodated in the cavity 14f. As a result, a force for widening the gap G acts. Conversely, when the pair of members is separated from the initial state, the control device 14i decreases the amount of fluid accommodated in the cavity 14f. As a result, a force for narrowing the gap G acts. In other words, since the fluid forming the gap G between the pair of members serves as a vibration damping material, vibrations that could be transmitted to the support 31 can be remarkably damped. Accordingly, it is possible to suppress the occurrence of inconvenience due to the cyclical vibrations generated from the sensor system 10.

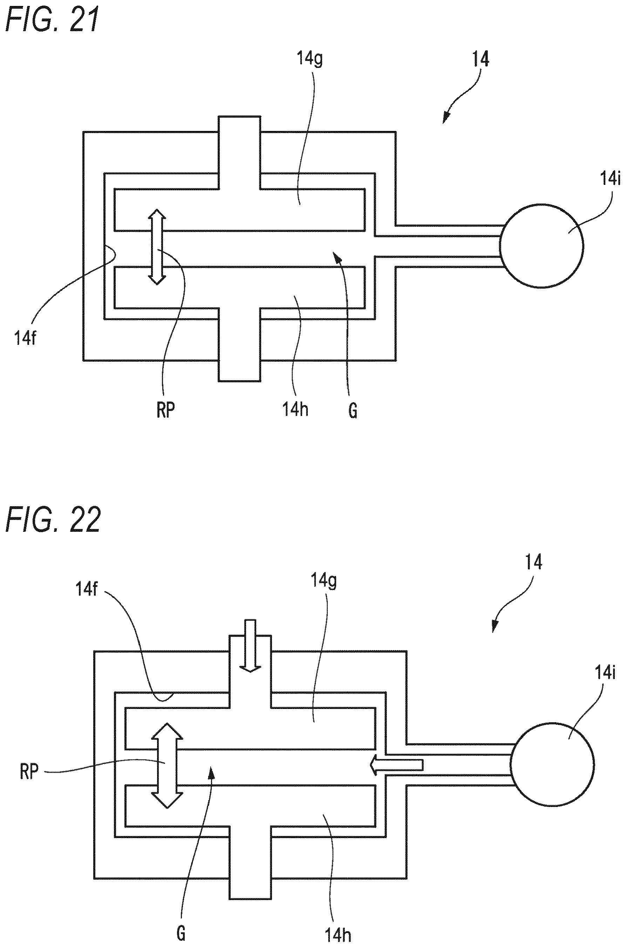

The first member 14g and the second member 14h may be magnetized so as to have a same pole. In this case, as illustrated in FIG. 21, the first member 14g and the second member 14h face each other in the stacking direction with the gap G therebetween with the repulsive force RP caused by the same pole magnetization. In other words, the first member 14g and the second member 14h maintain a non-contact state at a position where the own weight in the fluid and the repulsive force RP are balanced.

According to such a configuration, when the pair of members approach each other due to the resonance vibrations generated in the housing 13 as illustrated in FIG. 22, the repulsive force RP for separating the two members is increased. In other words, since the gap G formed between the pair of members and the repulsive force RP acting between the pair of members serve as a cushion, it is possible to damp the vibrations that could be transmitted to the support 31. Accordingly, although the configuration is simple, even if the control amount of the fluid by the control device 14i is reduced, it is possible to obtain the vibration absorbing performance equivalent to or higher than the configuration described with reference to FIGS. 19 and 20.

In this example, as described with reference to FIGS. 17 and 18, a regulating member 14e may be disposed between the first member 14g and the second member 14h.

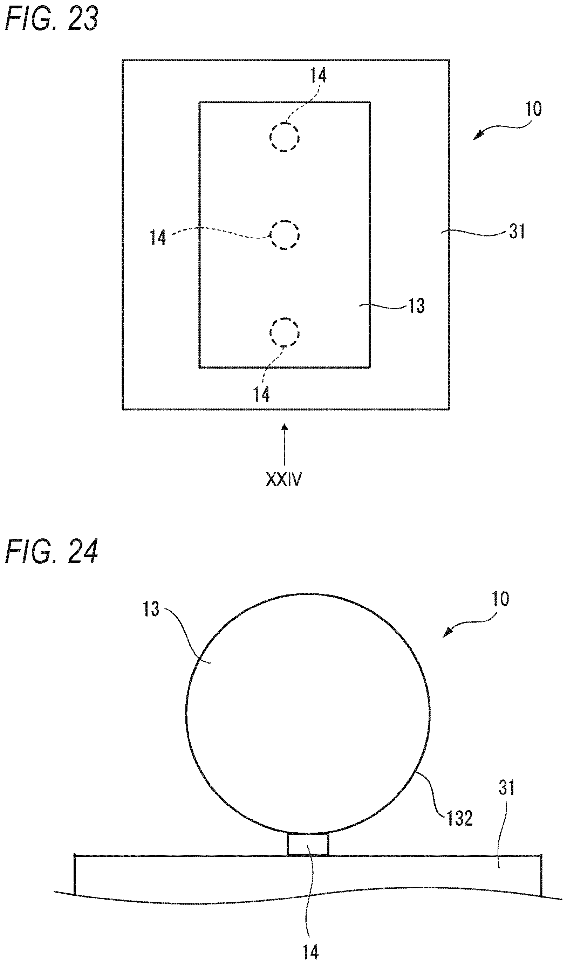

The shape of the housing 13 illustrated in FIG. 14 does not have to be a rectangular parallelepiped shape having a flat bottom surface 131. As illustrated in FIGS. 23 and 24, the housing 13 may have a cylindrical shape having a curved surface 132 facing the support 31. In this case, the above-described vibration mode analysis is performed with respect to the curved surface 132, so that the vibration absorbing device 14 is disposed so as to avoid a position of the node of the specified resonance vibration mode.

As illustrated in FIG. 19, the sensor system 10 may include a first detection device 15. The first detection device 15 is configured to output a first detection signal DS1 corresponding to a physical quantity relating to a change occurring in the housing 13 with the operation of the deflecting device 12. Examples of the physical quantity include a force, a torque, a position, a rotation angle, a velocity, a rotation angular velocity, a mass, a moment of inertia, a viscous damping coefficient, a viscous friction coefficient, a spring constant, and the like.

The first detection device 15 may be configured to include a displacement sensor attached to the housing 13. Examples of the displacement sensor include a strain gauge, an acceleration sensor, an optical fiber sensor, and the like. The optical fiber sensor may employ a method of detecting light reflected by an FBG (Fiber Bragg Grating) formed in an optical fiber, a method of detecting Rayleigh scattered light or Brillouin scattered light generated by glass particles forming an optical fiber, or the like. Since the configuration itself of the optical fiber sensor according to each method is well known, detailed descriptions thereof will be omitted.

The relationship between the change occurring in the housing 13 corresponding to the first detection signal DS1 and the displacement of at least one of the first member 14g and the second member 14h caused by the change is specified in advance through experiments or simulations. The first detection signal DS1 outputted from the first detection device 15 is inputted to the control device 14i. The control device 14i is configured to perform feedback-control of the amount of fluid accommodated in the cavity 14f based on the relationship specified in advance and the inputted first detection signal DS1. In other words, the amount of fluid accommodated in the cavity 14f is increased or decreased so as to suppress the displacement of at least one of the first member 14g and the second member 14h specified with the first detection signal DS1 by way of the relationship.

In order to realize the above-described feedback control, the number and the position of the first detecting device 15 attached to the housing 13 can be appropriately determined in accordance with the physical quantity to be detected. For example, the analysis of the vibration mode described with reference to FIG. 8 is performed with respect to a specific surface of the housing 13, so that the first detection device 15 may be disposed at a position of the antinode of the resonance vibrations mode specified as a result. In that position, since the change occurring in the housing 13 with the operation of the deflecting device 12 increases, the acquisition of the first detection signal DS1 used for the feedback control can be facilitated.

It should be noted that as long as it is avoided a position corresponding to the node of the vibration mode of the resonance frequency included in the vibrations generated in the housing 13 with the operation of the deflecting device 12, the position of the first detection device 15 may not exactly coincide with the position of the antinode of the vibration mode.

In addition to or in place of the first detection device 15, as illustrated in FIG. 19, the sensor system 10 may include a second detection device 16. The second detection device 16 is configured to detect a condition of the vehicle 30 based on information acquired from a plurality of sensors disposed at various locations of the vehicle 30. Examples of the condition of the vehicle 30 include a traveling condition and an environmental condition. Examples of the traveling condition include speed, presence or absence of steering, presence or absence of braking, and the like. Examples of the environmental condition include a road surface condition (presence or absence of paving, flatness, hardness, etc.), a road type (a street, an expressway, a mountain path, etc.), weather, a time zone, and the like. For example, the second detection device 16 may be implemented as one function of a control device such as an ECU installed in the vehicle 30.

The second detection device 16 is configured to output a second detection signal DS2 corresponding to the detected condition of the vehicle 30. Different second detection signals DS2 are predefined based on multiple conditions of the vehicle 30 to be assumed, and a feedforward control model applied for each second detection signal DS2 is determined in advance. The second detection signal DS2 outputted from the second detection device 16 is inputted to the control device 14i. The control device 14i is configured to perform feed-forward control of the amount of the fluid accommodated in the cavity 14f based on the control model associated with the second detection signal DS2 as inputted.

For example, supposing a case where the first condition that the vehicle 30 is traveling on an expressway is detected and a case where the second condition that the vehicle 30 is traveling on an unpaved mountain path is detected. In the second condition, unexpected resonance vibrations are more likely to be generated in the housing 13 in comparison with the first condition. Accordingly, in a case where the second detection signal DS2 corresponding to the second condition is inputted, the control device 14i increases an initial amount of the fluid accommodated in the cavity 14f in order to enhance the vibration absorbing effect.

According to such a configuration, it is possible to suppress not only the resonance vibrations of the housing 13 caused by the operation of the deflecting device 12 but also the transmission of the unexpected resonance vibrations of the housing 13 to the support 31 that is caused by the condition of the vehicle 30.

The second detection device 16 may be configured to be able to receive an instruction for altering the control model by the occupant. For example, when traveling on an unpaved mountain path, the occupant may input an instruction to enable the feed-forward control in the second condition through a switch or the like. In this case, the second detection device 16 outputs the second detection signal DS2 corresponding to the instruction, and the control device 14i increases the initial amount of fluid accommodated in the cavity 14f in order to enhance the vibration absorbing effect.

The feedback control and the feedforward control described above may be combined. For example, in a case where a deviation from a normal detecting operation is observed in the sensor 11 as a result of the enabling of the feed-forward control performed by the control model corresponding to the second condition, a reason would be occurrence of low-frequency oscillation on the sensor 11 due to excessive vibration absorbing effect caused by that control model. In this case, the control device 14i may automatically alter the control model to reduce the initial amount of the fluid accommodated in the cavity 14f. The altering may be executed by an instruction from the occupant.

Each of the functions of the control device 14i described above can be implemented by a general-purpose microprocessor operating in cooperation with a general-purpose memory. Examples of the general-purpose microprocessor include a CPU, an MPU, and a GPU. Examples of the general-purpose memory include a RAM and a ROM. In this case, a computer program for executing the processing described above can be stored in the ROM. The ROM is an example of a non-transitory computer-readable medium having stored a computer program. The general-purpose microprocessor specifies at least a part of the computer program stored in the ROM, loads the program on the RAM, and executes the processing described above in cooperation with the RAM. The computer program may be pre-installed in a general-purpose memory, or may be downloaded from an external server device (not illustrated) via a wireless communication network (not illustrated), and then installed in the general-purpose memory. In this case, the external server device is an example of a non-transitory computer-readable medium having stored a computer program.

Each of the functions of the control device 14i may be implemented by an exclusive integrated circuit capable of executing the above-described computer program. Examples of the exclusive integrated circuit include a microcontroller, an ASIC, and an FPGA. In this case, the above-described computer program is pre-installed in a memory element included in the exclusive integrated circuit. The memory element is an example of a non-transitory computer-readable medium having stored a computer program. The control device 14i may be implemented by a combination of the general-purpose microprocessor and the exclusive integrated circuit.

In a case where the sensor system 10 includes a plurality of vibration absorbing devices 14, a single control device 14i may be shared by the vibration absorbing devices 14.

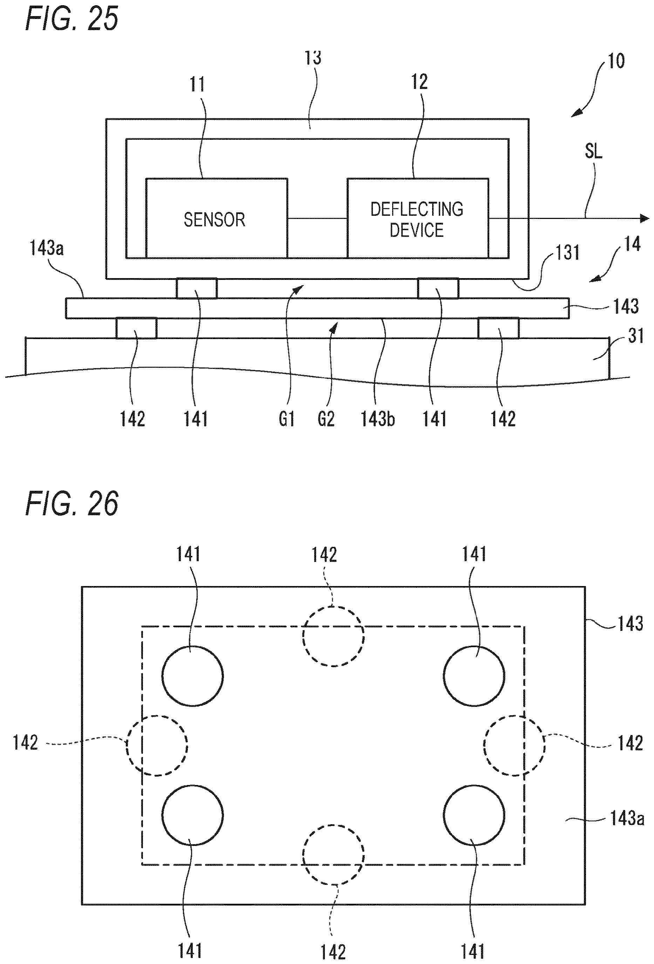

As illustrated in FIG. 25, the vibration absorbing device 14 may include a first vibration absorbing device 141, a second vibration absorbing device 142, and an intermediate member 143. The intermediate member 143 has a first surface 143a and a second surface 143b. The first surface 143a faces the housing 13 with a first gap G1 therebetween. The second surface 143b faces the support 31 with a second gap G2 therebetween.

The first vibration absorbing device 141 is disposed between the first surface 143a of the intermediate member 143 and the housing 13. The second vibration absorbing device 142 is disposed between the second surface 143b of the intermediate member 143 and the support 31.

Each of the first vibration absorbing device 141 and the second vibration absorbing device 142 may have any configurations described with reference to FIGS. 15 to 22. In other words, in the first vibration absorbing device 141, the first member 14g is coupled to the housing 13, and the second member 14h is coupled to the intermediate member 143. Similarly, in the second vibration absorbing device 142, the first member 14g is coupled to the intermediate member 143, and the second member 14h is coupled to the support 31.

It should be noted that as long as at least the first vibration absorbing device 141 has the above configuration, the second vibration absorbing device 142 may be replaced with a well-known vibration absorbing member or insulator.

According to the configuration as described above, the resonance vibrations generated in the housing 13 are transmitted to the intermediate member 143 while being absorbed by the first vibration absorbing device 141. Since the intermediate member 143 is disposed between the housing 13 and the support 31 with the first gap G1 and the second gap G2 therebetween, the bending deformation of the intermediate member 143 is allowed, so that the absorption of the resonance vibrations is promoted. Since the remaining resonance vibrations are further subjected to the absorption with the second vibration absorbing device 142, the vibrations that could be transmitted to the support 31 can be remarkably damped. Accordingly, it is possible to further suppress the occurrence of inconvenience due to the cyclical vibrations generated from the sensor system 10.

In this case, the first vibration absorbing device 141 may be arranged so as to avoid the node of the vibration mode specified by the analysis of the vibration mode described with reference to FIG. 8.

As illustrated in FIG. 26, the second vibration absorbing device 142 may be disposed such that at least a portion thereof does not overlap the first vibration absorbing device 141 when viewed from a normal direction of the first surface 143a of the intermediate member 143.

Since the vibration mode generated in the intermediate member 143 is different from the vibration mode generated in the housing 13, the second vibration absorbing device 142 is disposed at a position different from the first vibration absorbing device 141 when viewed from the normal direction of the first surface 143a of the intermediate member 143, so that the vibration that could be transmitted to the support 31 can be efficiently absorbed.

The second vibration absorbing device 142 may be disposed so as to avoid the node of the vibration mode specified by the analysis performed with respect to the intermediate member 143 as described with reference to FIG. 8.

The above embodiments are merely illustrative to facilitate understanding of the presently disclosed subject matter. The configuration according to each of the above embodiments can be appropriately modified without departing from the gist of the presently disclosed subject matter.

In the configuration illustrated in FIGS. 1 and 25, a single intermediate member 143 is disposed between the housing 13 and the support 31. However, at least one more intermediate member may be additionally disposed between the intermediate member 143 and the support 31. In this case, the vibration absorbing device 14 is disposed between the intermediate members.

In addition to or instead of the deflecting device 12 including the multiple lenses illustrated in FIG. 2, the sensing direction of the sensor 11 may be cyclically changed by a light reflecting device. Examples of the light reflecting device capable of performing such an operation include devices operated with BradeScan (registered trademark) system, a polygon mirror system, a MEMS mirror system, or the like.

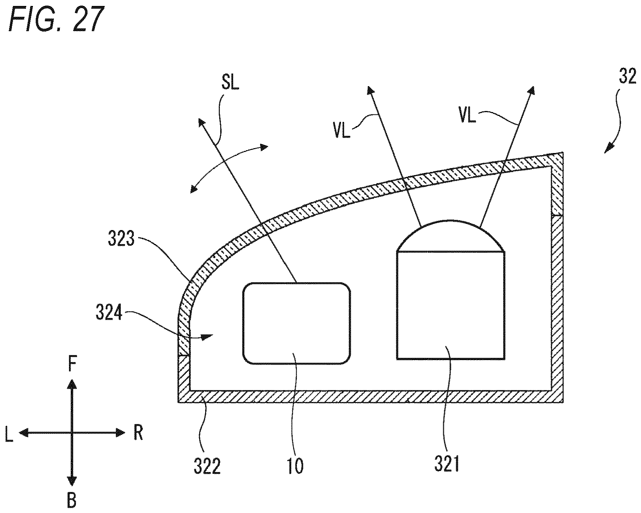

In order to emit the sensing light SL toward at least one of the front and the left of the left front portion LF of the vehicle 30 as illustrated in FIG. 3, the sensor system 10 may be installed in a lighting device 32 illustrated in FIG. 27.

The lighting device 32 includes a light source 321. The light source 321 is configured to emit visible light VL. The lighting device 32 includes a housing 322 and a translucent cover 323. The housing 322 and the translucent cover 323 define a lamp chamber 324. The light source 321 and the sensor system 10 are accommodated in the lamp chamber 324. In this case, a portion of the housing 322 may serve as the support 31.

Also in this example, since the transmission of the vibrations generated with the operation of the deflecting device 12 that cyclically changes the sensing direction of the sensor 11 is suppressed, it is possible to suppress the occurrence of abnormal noise or vibrations of lighting with the visible light VL caused by the transmission of the vibrations to the lighting device 32.

The lighting device 32 may be mounted on a right front portion RF of the vehicle 30 illustrated in FIG. 3. The right front portion RF is an area located on the right of the center in the left-right direction of the vehicle 30 and ahead of the center in the front-rear direction of the vehicle 30. The lighting device 32 mounted on the right front portion RF may have a configuration symmetrical to the lighting device 32 illustrated in FIG. 27 relative to the left-right direction. In this case, the sensing direction of the sensor 11 includes at least one of the front and the right of the right front portion RF.

The lighting device 32 may be mounted on a left rear portion LB and a right rear portion RB of the vehicle 30 illustrated in FIG. 3. The left rear portion LB is an area located on the left of the center in the left-right direction of the vehicle 30 and behind the center in the front-rear direction of the vehicle 30. The right rear portion RB is an area located on the right of the center in the left-right direction of the vehicle 30 and behind the center in the front-rear direction of the vehicle 30. The lighting device 32 mounted on the left rear portion LB may have a configuration symmetrical to the lighting device 32 illustrated in FIG. 27 relative to the front-rear direction. In this case, the sensing direction of the sensor 11 includes at least one of the rear and the left of the left rear portion LB. The lighting device 32 mounted on the right rear portion RB may have a configuration symmetrical to the lighting device 32 mounted on the left rear portion LB relative to the left-right direction. In this case, the sensing direction of the sensor 11 includes at least one of the rear and the right of the right rear RB.

The mobile entity equipped with the lighting device 32 is not limited to the vehicle 30. Examples of other mobile entities include railways, flying objects, aircrafts, and ships. The mobile entity equipped with the lighting device 32 may not require a driver.

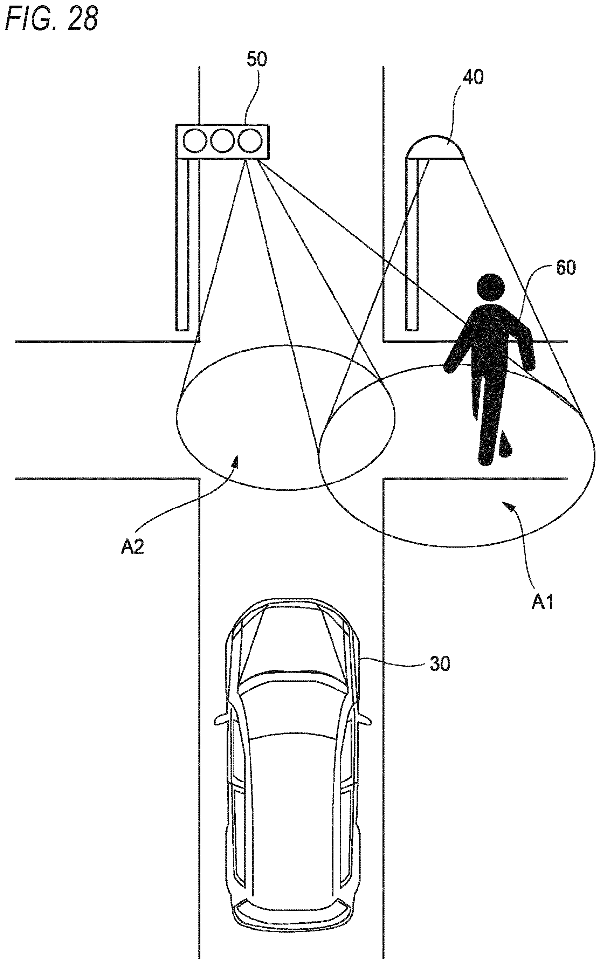

The lighting device 32 does not have to be mounted on the mobile entity. As illustrated in FIG. 28, the lighting device 32 may be mounted on a traffic infrastructure such as a street lamp 40 or a traffic light 50. The street lamp 40 and the traffic light 50 are examples of the monitoring device.

In a case where the lighting device 32 is mounted on the street lamp 40, an area A1 is lighted with the visible light VL emitted from the light source 321, and a walker 60, a vehicle, and the like situating in the area A1 can be detected with the sensing light SL emitted from the sensor system 10. For example, when the sensor system 10 detects that a walker 60 or a vehicle is about to enter an intersection, the information may be notified, via communication, to the vehicle 30 that is about to enter the intersection from another direction.

In a case where the lighting device 32 is mounted on the traffic light 50, the light source 321 may be used to visualize information in an area A2 on the traffic road surface. The sensing light SL emitted from the sensor system 10 may be used to detect a walker 60, a vehicle, or the like situating in the area A1. For example, when the sensor system 10 detects that a walker 60 or a vehicle is about to enter an intersection, information (characters, markers, blinking alert colors, etc.) prompting the vehicle 30 that is about to enter the intersection from another direction can be visualized in the area A2.

The lighting device 32 may be mounted on a monitoring device installed in a house, a facility, or the like. For example, the monitoring device may be configured to turn on the light source 321 to light a prescribed area when an object that has entered the area is detected with the sensing light SL emitted from the sensor system 10.

In a case where the sensor system 10 is installed in a monitoring device other than the mobile entity, it is not necessary to be accommodated in the lamp chamber 324 of the lighting device 32. The sensor system 10 may be disposed at an appropriate position according to the specification of the monitoring device.

The present application is based on Japanese Patent Application No. 2021-045479 filed on March 19, 2021, Japanese Patent Application No. 2021-045480 filed on March 19, 2021, and Japanese Patent Application No. 2021-045481 filed on March 19, 2021, the entire contents of which are incorporated herein by reference.

## Claims

1. A sensor system adapted to be installed in a monitoring device, comprising:
a sensor configured to detect an object situating in a sensing direction;
a deflecting device configured to change the sensing direction cyclically;
a housing accommodating the sensor and the deflecting device; and
a vibration absorbing device adapted to be disposed between the housing and a support that constitutes a part of the monitoring device,
wherein the vibration absorbing device includes:
an intermediate member having a first surface adapted to face the housing with a first gap therebetween and a second surface adapted to face the support with a second gap therebetween;
a first vibration absorbing device disposed between the housing and the first surface of the intermediate member; and
a second vibration absorbing device adapted to be disposed between the support and the second surface of the intermediate member.

2. The sensor system according to claim 1,
wherein the first vibration absorbing device is disposed at a position avoiding a node of a vibration mode of a resonance frequency included in vibrations generated in the housing with an operation of the deflecting device.

3. The sensor system according to claim 2,
wherein the vibration mode includes an odd order vibration mode.

4. The sensor system according to any one of claims 1 to 3,
wherein the intermediate member has an opening communicating the first gap and the second gap.

5. The sensor system according to any one of claims 1 to 4,
wherein the second vibration absorbing device is disposed such that at least a portion thereof is not overlapped with the first vibration absorbing device when viewed from a normal direction of the first surface of the intermediate member.

6. The sensor system according to any one of claims 1 to 5,
wherein the monitoring device is a mobile entity.

7. The sensor system according to any one of claims 1 to 5,
wherein the monitoring device includes a lamp chamber accommodating a light source configured to emit visible light; and
wherein the housing and the vibration absorbing device are adapted to be accommodated in the lamp chamber.

8. A sensor system adapted to be installed in a monitoring device, comprising:
a sensor configured to detect an object situating in a sensing direction;
a deflecting device configured to change the sensing direction cyclically;
a housing accommodating the sensor and the deflecting device; and
a vibration absorbing device adapted to be disposed between the housing and a support that constitutes a part of the monitoring device,
wherein the vibration absorbing device includes a pair of magnetized members that are magnetized so as to have a same pole, and are arranged so as to face each other in a first direction with a gap therebetween.

9. The sensor system according to claim 8,
wherein the vibration absorbing device includes a regulating member configured to regulate displacement of the magnetized members in the first direction.

10. The sensor system according to claim 9,
wherein the regulating member is disposed between the magnetized members.

11. The sensor system according to any one of claims 8 to 10,
wherein the vibration absorbing device includes a guide member configured to allow the displacement of the magnetized members in the first direction while regulating displacement of the magnetized members in a second direction intersecting the first direction.

12. The sensor system according to any one of claims 8 to 11,
wherein the vibration absorbing device is disposed at a position avoiding a node of a vibration mode of a resonance frequency included in vibrations generated in the housing with an operation of the deflecting device.

13. The sensor system according to claim 12,
wherein the vibration mode includes an odd order vibration mode.

14. The sensor system according to any one of claims 8 to 13,
wherein the vibration absorbing device includes:
an intermediate member having a first surface adapted to face the housing with a first gap therebetween and a second surface adapted to face the support with a second gap therebetween;
a first vibration absorbing device disposed between the housing and the first surface of the intermediate member; and
a second vibration absorbing device adapted to be disposed between the support and the second surface of the intermediate member; and
wherein the magnetized members are disposed in at least the first vibration absorbing device.

15. The sensor system according to claim 14,
wherein the second vibration absorbing device is disposed such that at least a portion thereof is not overlapped with the first vibration absorbing device when viewed from a normal direction of the first surface of the intermediate member.

16. The sensor system according to claim 14 or 15,
wherein the intermediate member has an opening communicating the first gap and the second gap.

17. The sensor system according to any one of claims 8 to 16,
wherein the monitoring device is a mobile entity.

18. The sensor system according to any one of claims 8 to 17,
wherein the monitoring device includes a lamp chamber accommodating a light source configured to emit visible light; and
wherein the housing and the vibration absorbing device are adapted to be accommodated in the lamp chamber.

19. A sensor system adapted to be installed in a monitoring device, comprising:
a sensor configured to detect an object situating in a sensing direction;
a deflecting device configured to change the sensing direction cyclically;
a housing accommodating the sensor and the deflecting device; and
a vibration absorbing device adapted to be disposed between the housing and a support that constitutes a part of the monitoring device,
wherein the vibration absorbing device includes:
a pair of members arranged so as to face each other in a first direction;
a cavity at least partially accommodating the members while allowing displacement of the members in the first direction; and
a control device configured to control an amount of fluid accommodated in the cavity so as to form a gap between the members.

20. The sensor system according to claim 19, further comprising:
a first detection device configured to output a first detection signal corresponding to a physical quantity related to a change caused in the housing with an operation of the deflecting device,
wherein the control device is configured to perform feedback control of the amount of fluid based on the first detection signal.

21. The sensor system according to claim 20,
wherein the first detection device is disposed at a position avoiding a node of a vibration mode of a resonance frequency included in vibrations generated in the housing with an operation of the deflecting device.

22. The sensor system according to any one of claims 19 to 21, further comprising:
a second detection device configured to output a second detection signal corresponding to a condition of the monitoring device,
wherein the control device is configured to perform feedforward control of the amount of fluid based on the second detection signal.

23. The sensor system according to any one of claims 19 to 22,
wherein the members are disposed at a position avoiding a node of a vibration mode of a resonance frequency included in vibrations generated in the housing with an operation of the deflecting device.

24. The sensor system according to claim 23,
wherein the vibration mode includes an odd order vibration mode.

25. The sensor system according to any one of claims 19 to 24,
wherein the members are magnetized so as to have a same pole.

26. The sensor system according to any one of claims 19 to 25,
wherein the vibration absorbing device includes a regulating member disposed between the members and configured to regulate displacement of the members in the first direction.

27. The sensor system according to any one of claims 19 to 26,
wherein the vibration absorbing device includes:
an intermediate member having a first surface adapted to face the housing with a first gap therebetween and a second surface adapted to face the support with a second gap therebetween;
a first vibration absorbing device disposed between the housing and the first surface of the intermediate member; and
a second vibration absorbing device adapted to be disposed between the support and the second surface of the intermediate member; and
wherein the members are disposed in the first vibration absorbing device.

28. The sensor system according to claim 27,
wherein the second vibration absorbing device is disposed such that at least a portion thereof is not overlapped with the first vibration absorbing device when viewed from a normal direction of the first surface of the intermediate member.

29. The sensor system according to claim 27 or 28,
wherein the intermediate member has an opening communicating the first gap and the second gap.

30. The sensor system according to any one of claims 19 to 29,
wherein the monitoring device is a mobile entity.

31. The sensor system according to any one of claims 19 to 30,
wherein the monitoring device includes a lamp chamber accommodating a light source configured to emit visible light; and
wherein the housing and the vibration absorbing device are adapted to be accommodated in the lamp chamber.
